# EUROPEAN PATENT SPECIFICATION

(11) **EP 1 801 294 B1**
(45) Date of publication and mention of the grant of the patent: **04.01.2012**
(21) Application number: 07003192.7
(22) Date of filing: 27.07.2004
(51) Int. Cl.: E02F 9/22, F16H 61/02, F16H 61/14

(54) **A method and a device for controlling movement of a work vehicle**
Verfahren und Vorrichtung zum Steuern der Bewegung eines Arbeitsfahrzeugs
Procédé et dispositif pour contrôler le mouvement d'un véhicule de travail

(43) Date of publication of application: 27.06.2007
(62) Divisional of application: 04775282.9
(73) Proprietor: Volvo Construction Equipment AB, 631 85 Eskilstuna (SE)
(72) Inventor: Brattberg, Björn, 633 47 Eskilstuna (SE)
(74) Representative: Fröhling, Werner Otto

(56) References cited:
- EP-A- 1 348 889
- DE-A1- 10 057 085
- US-A- 4 800 660
- US-B1- 6 234 254

## Description

### FIELD OF THE INVENTION AND PRIOR ART

The present invention relates to a method and a device for controlling movements of a work vehicle comprising an equipment for handling objects or material.

The term work vehicle comprises different types of construction machines, such as a wheel loader, a backhoe loader and an excavator. The invention will be described below in a case in which it is applied in a wheel loader. This is to be regarded only as an example of a preferred application.

The wheel loader can be utilized for a number of different areas of activity, such as lifting and transporting stone and gravel, pallets and logs. For some of these activities, use is made of different implements, such as a bucket, a fork and gripping arms. Besides an implement, the equipment also comprises a load-arm unit and one or more working cylinder(s) for operating/moving the implement in question.

When the wheel loader is used for loading material on a loading vehicle such as a dumper or a truck, the implement carrying the material is raised to a high vertical position and the wheel loader is brought nearer to the loading vehicle. Due to the large weight of the material, the movement of the wheel loader is sensitive, which requires great driver skills, and often leads to jerks and swings.

It is known to use different so-called gear shifting modes according to a specific gear shifting strategy in wheel loaders with an automatic gear box. Shifting to a higher gear takes place at different minimum engine speeds in two different gear shifting modes. Further, shifting to a lower gear takes place at different minimum vehicle speed in two different gear shifting modes. The gear shifting modes are selected manually by a driver by operating a handle, a so-called APS-handle.

Further, it is known, for example from EP 0715102, to control gear shifting modes of an automatic vehicle transmission based on parameter signals representing specific operation conditions, such as road conditions. Especially, the parameter signal represents the inclination of the road, on which the vehicle is moving.

WO 03/89723 relates to a device for controlling a work vehicle. The control device comprises actuation means, which is manually operated by the driver, for selecting different operating states. Such operating states may be defined by specific activities where different implements, like a bucket or pallet forks are used. Said actuation means is coupled to a central unit. The central unit is coupled to the hydraulic system for moving the implement and the movement of the implement is controlled depending on the selected operating state. The central unit is also coupled to the engine and/or the transmission for controlling the speed of the engine and/or selecting a gear point for the transmission depending on the selected operating state. The control device also comprises means for detection of the position of the implement. The detection means is also coupled to the central unit and the speed of movement of the implement may be limited depending on the detected position of the implement.

DE 100 57 085 discloses a loading operation vehicle provided with output characteristic changing means for changing an output characteristic of an engine in a plurality of stages, shift timing changing means for changing a shift timing of an automatic transmission in a plurality of stages, working machine flow amount changing means for changing a working machine flow amount of a pressurized oil flowing through a working machine actuator in a plurality of stages, mode setting means for combining the output characteristic of the engine, the shift timing of the automatic transmission and the set value of the working machine flow amount with each other so as to set a plurality of modes, and mode selecting means for freely selecting from the modes. This document shows a method and a device according to the preamble of claims 1 and 12.

US 4,800,660 discloses an automatic speed stage changing apparatus for a wheel loader. An automatic downshifting is performed when the bucket reaches a predetermined position corresponding to that the bucket comes into contact with the ground and the bucket is arranged horizontally. US 4,800,660 comprises the features disclosed in the preamble of claims 1 and 13.

### SUMMARY OF THE INVENTION

A first object of the invention is to achieve a method for controlling the movements of a work vehicle, which creates softer movements and a more simple operation, especially during loading.

This object is achieved with the method of claim 1. Preferably, the position of the equipment is determined, by determining the vertical position of the equipment and for a high vertical position changing gears in the gear box so that the driver can depress a gas pedal more for a certain vehicle speed/movement, the movements of the work vehicle may be softened and the operation of the vehicle facilitated and made more efficient.

According to a preferred embodiment, the position of the equipment is determined by a lift angle and/or a tilt angle of an implement in the equipment. This may be achieved by sensing the extension of a hydraulic lift and/or tilt cylinder in the equipment and/or by sensing the angular relationship in an articulation point in a load-arm unit.

According to a further preferred embodiment, at least two different equipment position regions are predefined.

By dividing the movement pattern of the implement in different regions, the operating parameter of the driveline may be controlled accurately. Especially, at least two different equipment position regions are predefined for each of the lift angle and the tilt angle of the implement. Specific combinations of a lift angle region and a tilt angle region may therefore be used for controlling the operating parameter of the driveline.

A second object of the invention is to achieve a device for controlling the movements of a work vehicle, which creates softer movements and a more simple operation, especially during loading.

This object is achieved with the device of claim 12.

Further preferred embodiments of the invention will be described in the following description and illustrated in the drawings.

### BRIEF DESCRIPTION OF THE DRAWINGS

The invention will be explained below, with reference to the embodiments shown on the appended drawings, wherein
- FIG 1: shows a wheel loader in a side view,
- FIG 2: schematically shows an exemplary embodiment of a driveline for the wheel loader,
- FIG 3: schematically shows a control device for controlling movements of the wheel loader,
- FIG 4: shows a diagram where different transmission gear points are exemplified, and
- FIG 5-7: schematically shows a wheel loader in three different cases, in which different equipment is applied.

### DETAILED DESCRIPTION OF PREFERRED EMBODIMENTS OF THE INVENTION

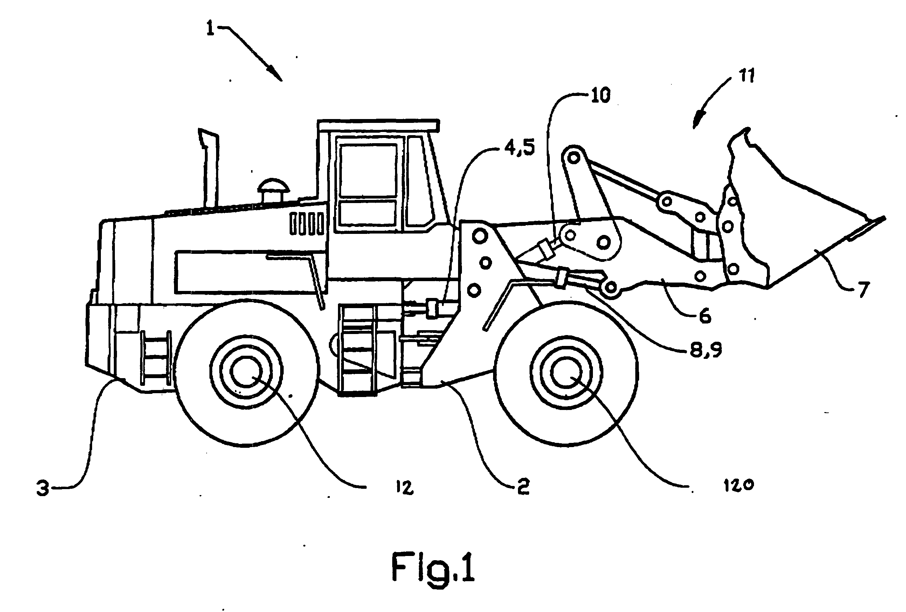

Figure 1 shows a wheel loader 1. The body of the wheel loader 1 comprises a front body section 2 and a rear body section 3, which sections each has a pair of half shafts 12,120. The body sections are connected to each other in such a way that they can pivot. The body sections 2,3 can pivot in relation to each other around an axis by means of two first hydraulic components in the form of hydraulic cylinders 4,5 arranged between the two sections. The hydraulic cylinders 4,5 are thus arranged to turn the wheel loader 1.

The wheel loader 1 comprises an equipment 11 for handling objects or material. The equipment 11 comprises a load-arm unit 6 and an implement 7 in the form of a bucket fitted on the load-arm unit. The load-arm unit 6 can be raised and lowered relative to the front section 2 of the vehicle by means of two second hydraulic components in the form of two hydraulic cylinders 8,9, each of which is connected at one end to the front vehicle section 2 and at the other end to the load-arm unit 6. The bucket 7 can be tilted relative to the load-arm unit 6 by means of a third hydraulic component in the form of a hydraulic cylinder 10, which is connected at one end to the front vehicle section 2 and at the other end to the bucket 7 via a link-arm system.

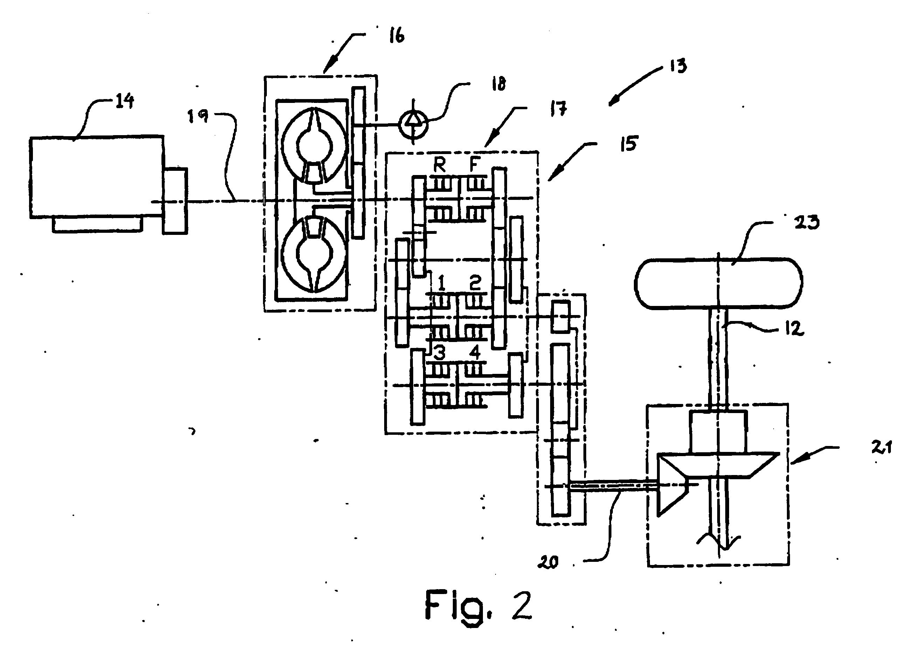

Figure 2 illustrates schematically an example of the wheel loader's 1 driveline 13. The driveline 13 comprises a combustion engine 14, in the form of a diesel engine, an automatic gearbox 15 and a hydrodynamic torque converter 16. The gearbox 15 consists of an electrically controlled automatic gearbox of the power-shift type. The gearbox 15 comprises a forward and reverse gear 17.

Figure 2 also shows a pump 18 in the wheel loader's hydraulic system for supplying the hydraulic cylinders 4,5,8,9,10 with hydraulic fluid. The pump 18 (like the torque converter 16) is driven by an output shaft 19 from the engine 14. An output shaft 20 from the gearbox 15 leads to a differential gear 21, which is drivingly connected to said half-shafts 12, on which the vehicle's driving wheels 23 are arranged.

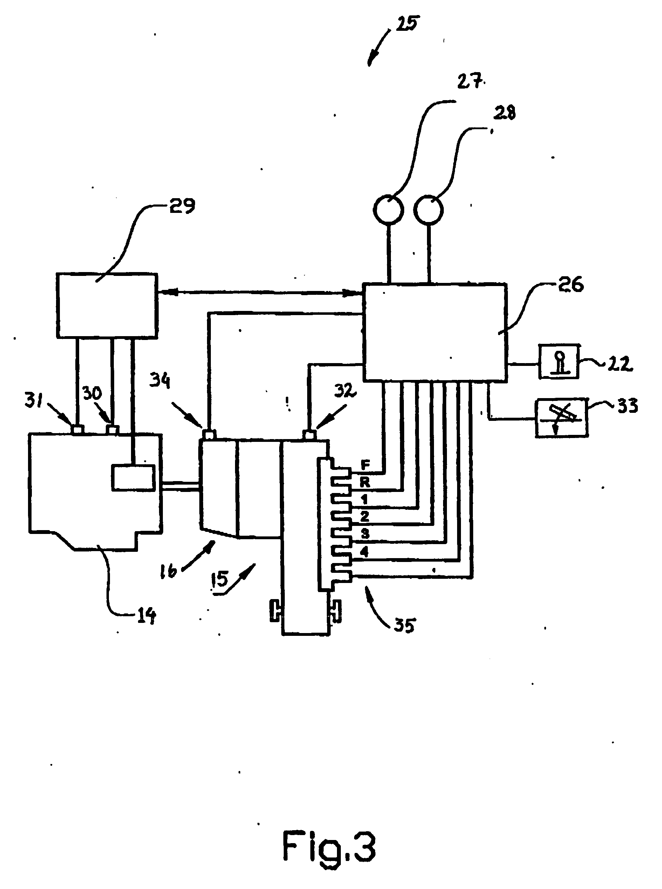

Figure 3 shows a device 25 for controlling movements of the wheel loader 1. The control device 25 comprises a first control unit 26 (or ECU, Electrical Control Unit) with software for controlling movements of the wheel loader. The control device 25 comprises means 27, 28 for determining a state of said equipment 11 for handling objects or material. Said means 27,28 are electrically connected to the control unit 26 and produce equipment state signals to the control unit 26.

More specifically, said means 27,28 are arranged for determining a position of the equipment 11 and are preferably formed by sensors. Said means 27,28 are arranged for detection of the position of the equipment in a vertical direction. Said sensors 27,28 are arranged for sensing the lift angle and the tilt angle, respectively, of the implement 7. The lift angle is defined in a vertical direction and determined by the extent of projection of the second hydraulic cylinders 8,9. The tilt angle is determined by the extent of projection of the third hydraulic cylinder 10. Said sensors 27,28 are formed by angular sensors for sensing the angular position at an articulation point. Each of said sensors 27,28 may alternatively be formed by linear sensors, sensing the extent of projection of the hydraulic cylinder in question.

The control device 25 comprises a second control unit 29, see Figure 3, for controlling the speed of the engine 14, via control means 31. The second control unit 29 is functionally (electrically) connected to the first control unit 26 and obtains information from this concerning the desired engine speed. This desired engine speed is in turn controlled by the degree of depression of a gas pedal 33. A sensor detecting the depression of the gas pedal is coupled to the first control unit 26. The engine speed is thus increased with increased depression of the gas pedal.

The engine speed is detected via an engine speed sensor 30. The sensor 30 is electrically connected to the first control unit 26.

The vehicle's speed is detected by a sensor 32 in a conventional way, for example by measurement of the speed of rotation of a shaft inside the gearbox 15.

The control device 25 comprises means 34 for controlling the torque converter 16. Said converter control means 34 is electrically connected to the control unit 26 and is controlled by the same. Said converter control means 34 is here arranged for controlling lock-up of the torque converter 16.

The control device 25 comprises a plurality of means 35 for controlling transmission shifting points in the gearbox 15. Said transmission control means 35 are electrically connected to the control unit 26 and are controlled by the same.

The control device 25 is arranged to shift gears according to a plurality of predefined gear modes. Shifting to a higher gear takes place at different minimum engine speeds in two different gear shifting modes. Further, shifting to a lower gear takes place at different minimum vehicle speed in two different gear shifting modes. One parameter for selecting the gear shifting mode is the above-mentioned determined equipment state. There may also be other parameters that influence the selection of gear shifting mode.

Further, a plurality of operating levers 22 are arranged in the wheel loader cab for being manoevered by the driver and electrically connected to the control unit 26 for controlling movements of the wheel loader 1 (and the equipment 11). The signals from the operating levers 22 are converted in a characteristic way in the control unit 26 depending on the position signals from the position sensors 27,28 and are then sent as output signals to the respective driveline component in question.

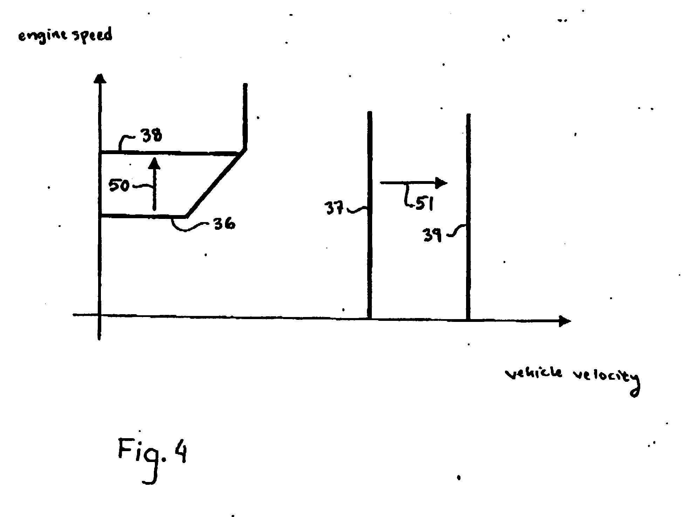

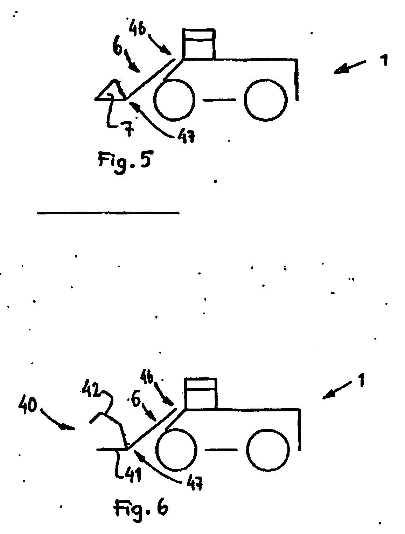

The inventive method for controlling the movements of the wheel loader will below be described according to a first embodiment in connection with figure 4 and 5. The wheel loader 1 is in figure 5 equipped with a bucket 7.

In figure 4, an example of a gear shifting procedure is shown for shifting between the first and second gear. Vehicle velocity is defined on the x-axis and engine speed is defined on the y-axis.

A state of the equipment 11 is defined by the lift angle and the tilt angle. More specifically, three position regions are defined for the lift angle, α; "Bucket down": α< -30°, "Bucket inbetween"· -30° < α < 30° and "Bucket raised": α> 30°. Three position regions are also defined for the tilt angle, β; "Bucket forwards": β < -30°, "Bucket neutral": -30° < β < 30° and "Bucket backwards": β > 30°. These three position regions for the lift angle and the tilt angle, respectively, give 3*3=9 equipment states.

Each of said nine equipment states correspond to a specific gear mode. Each gear mode comprises predefined transmission shifting points adapted for an optimum operation. Below follows three examples of gear modes.

A first curve 36, or line, in the diagram, defines the engine speed limit for shifting from gear number two to gear number one in a first gear mode. The gear shifting line is different for different gear modes, which is indicated by an arrow 50. A second curve 38, or line, in the diagram defines the engine speed limit for shifting from gear number two to gear number one in a second gear mode. The first and second curve 36,38 are here defined by straight lines at different engine speeds.

A third curve 37, or line, in the diagram, defines the vehicle velocity limit for engaging lock-up in the converter 16 in a third gear mode. The converter lock-up line is different for different gear modes, which is indicated by an arrow 51. A fourth curve 39, or line, in the diagram defines the vehicle velocity limit for engaging lock-up in the converter 16 in a fourth gear mode. The third and fourth curve 37,39 are here defined by straight lines at different vehicle velocities.

A vehicle state is below defined by the parameters engine speed and vehicle velocity.

As a first example, the detected equipment state is: lift angle; "Bucket down", and tilt angle; "Bucket neutral". This equipment state is linked to the first curve 36 in the diagram (defining the engine speed limit for shifting from gear number two to gear number one). Further, this equipment state is also linked to the third curve 37 in the diagram (defining the vehicle velocity limit for engaging lock-up in the converter 16).

As a second example, the detected equipment state is: lift angle; "Bucket raised", and tilt angle; "Bucket forwards". For this equipment state, shifting down to gear number one is prohibited and lock-up in the converter is also prohibited.

As a third example, the detected equipment state is: lift angle; "Bucket down", and tilt angle; "Bucket backwards". This equipment state is linked to the second curve 38 in the diagram (defining the engine speed limit for shifting from gear number two to gear number one). Further, this equipment state is also linked to the fourth curve 39 in the diagram (defining the vehicle velocity limit for engaging lock-up in the converter 16).

As an alternative to the bucket, the above-described method is also applicable when the wheel loader is equipped with pallet forks.

The above-described method may also be used for equipment with more degrees of freedom.

Figure 5 is a schematic drawing of the wheel loader shown in figure 1. The lift angle is indicated with reference numeral 46 at the position where the load-arm unit 6 is connected to the vehicle body. The tilt angle is indicated with reference numeral 47 at the position where the bucket 7 is connected to the load-arm unit 6.

In figure 6, a wheel loader 1 is equipped with a timber enclosing fork 40. The lift angle is indicated with reference numeral 46 at the position where the load-arm unit 6 is connected to the vehicle body. The tilt angle is indicated with reference numeral 47 at the position where the fork 40 is connected to the load-arm unit 6. Such type of fork 40 comprises two arms 41,42, which are movable in relation to each other via an articulation joint 47 for enclosing elongated pieces, like timber, between each other. Said equipment state may in this case not only be defined by said plurality of equipment position regions for the lift angle and tilt angle, but in addition be defined by a plurality of equipment position regions for the relative positions of said two forks 41,42.

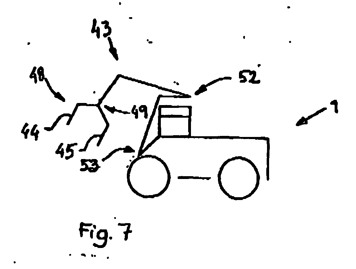

In figure 7, a wheel loader 1 is equipped with a specific type of load-arm unit; a so-called high lift 43 for timber. The tilt angle is indicated with reference numeral 53 at the position where the load-arm unit 43 is connected to the vehicle body. The lift angle is indicated with reference numeral 52 at an articulation point between two arms in the load-arm unit 6. Like in the embodiment of figure 6, the load-arm unit 43 comprises a fork 48. The fork 48 comprises two arms 44,45, which are movable in relation to each other via an articulation joint 49 for enclosing elongated pieces, like timber, between each other.

Further, the fork 48 is rotatably arranged in the load-arm unit at its point of connection to the load-arm unit 43. Said equipment state may in this case not only be defined by said plurality of equipment position regions for the lift angle, tilt angle, and relative position of the two forks 44,45, but in addition be defined by a plurality of equipment position regions for the rotation angle.

The invention is also directed to a computer program comprising code means for performing all the method steps described above when said program is run on a computer. Said computer program is loaded in a memory in the control unit. Said computer program may be sent to the control unit by wireless technique, for example via the internet.

The invention is further directed to a computer program product comprising program code means stored on a computer readable medium for performing the method described above when said program product is run on a computer. Said computer readable medium may be in the form of a floppy disk or a CD-ROM.

The abovementioned control unit (ECU) 26 is also often called a CPU (Control Power Unit) or plainly vehicle computer.

The invention is not in any way limited to the above described embodiments, instead a number of alternatives and modifications are possible without departing from the scope of the following claims.

For example, the gearbox design shown in Figure 2 is only to be regarded as an example of a gearbox that can be used for carrying out the movement method.

Further, said gear mode may comprise controlling the speed of the engine.

In addition, the two control units 26, 29 can be integrated into a single control unit.

As an alternative, or complement, to controlling transmission shifting points and lock-up in the converter, said control unit may be arranged to set a torque curve in the engine.

As an alternative, or complement, to the vertical position, said equipment state may comprise the speed of movement of the equipment.

The invention may also be applied for a fork-lift truck for handling pallets in an industry.

## Claims

1. A method for controlling movements of a work vehicle (1) comprising an equipment (11) for handling objects or material, wherein a state of said equipment (11) is determined and a first and a second operating parameter of a driveline (13) of the vehicle are controlled depending on the determined equipment state, said first operating parameter being formed by transmission shifting points,
**characterized in that**
the second operating parameter is formed by engaging a lock-up in a torque converter (16) in the said driveline (13).

2. The method as claimed in claim 1,
**characterised in that** the position of the equipment (11) is determined.

3. The method as claimed in claim 2,
**characterized in that**
at least two different equipment position regions are predefined, that the control of said at least one operating parameter is different for said predefined regions, and that a first predefined equipment position region is selected when the determined position is within said predefined equipment position region.

4. The method as claimed in claim 2 or 3,
**characterized in that**
the position of the equipment (11) is determined by a lift angle and a tilt angle of an implement (7) in the equipment (11).

5. The method as claimed in claim 3 and 4,
**characterized in that**
at least two different equipment position regions are predefined for each of the lift angle and the tilt angle of the implement.

6. The method as claimed in claim 5,
**characterized in that**
the control of said driveline operating parameter is determined by both one implement position region for the lift angle and one implement position region for the tilt angle.

7. The method as claimed in any of the preceding claims, **characterized in that** at least two different gear modes are predefined, that a first gear mode is selected depending on the determined equipment state and that said driveline operating parameter is controlled according to the selected gear mode.

8. The method as claimed in any of the preceding claims, **characterized in that** at least one operating condition of the vehicle is detected and said operating parameter is controlled depending on the detected value of the operating condition.

9. The method as claimed in claim 8,
**characterized in that** said operating condition comprises engine speed and/or vehicle velocity.

10. A computer program comprising code means for performing all the steps according to one of the claims 1 to 9 when said program is run on a computer.

11. A computer program product comprising program code means stored on a computer readable medium for performing the method of any one of the claims 1 to 9 when said program product is run on a computer.

12. A device for moving a work vehicle (1) comprising a driveline (13) and equipment (11) for handling objects or material, wherein the device comprises means (27, 28) for determining a state of said equipment (11) and a control unit (26, 29) for controlling a first and a second operating parameter of the driveline depending on the determined equipment state, said first operating parameter being formed by transmission shifting points,
**characterized in that**
the second operating parameter is formed by engaging a lock-up in a torque converter (16) in the said driveline (13).

13. The device as claimed in claim 12,
**characterized in that** said state determining means (27,28) are arranged for determining a position of the equipment (11).

14. The device as claimed in claim 13,
**characterized in that**
the control unit (26,29) has stored at least two different predefined equipment position regions, that the control of said at least one operating parameter is different for said predefined regions, and that the control unit (26, 29) is arranged to select a first predefined equipment position region when the determined position is within said predefined equipment position region.

15. The device as claimed in claim 13 or 14,
said position determining means (27, 28) is arranged to determined a lift angle and a tilt angle of an implement (7) in the equipment (11).

16. The device as claimed in claim 14 and 15,
**characterized in that**
the control unit (26,29) has stored at least two different predefined equipment position regions for each of the lift angle and the tilt angle of the implement.

17. The device as claimed in claim 16,
**characterized in that**
the control unit (26,29) is arranged to control said driveline operating parameter based on both one implement position region for the lift angle and one implement position region for the tilt angle.

18. The device as claimed in any claims 12-17,
**characterized in that** at least two different gear modes are predefined, that a first gear mode is selected depending on the determined equipment state and that said driveline operating parameter is controlled according to the selected gear mode.

19. The device as claimed in any of claims 12-18,
**characterized in that**
the device comprises means (30,32) for detecting at least one operating condition of the vehicle and the control unit (26,29) is arranged to control said operating parameter depending on the detected value of the operating condition.

20. The device as claimed in claim 19,
**characterized in that** said detection means (30,32) is arranged to detect engine speed and/or vehicle velocity.

## Patentansprüche

1. Verfahren zur Steuerung von Bewegungen eines Arbeitsfahrzeugs (1) mit einer Einrichtung (11) zur Handhabung von Objekten oder Material, wobei ein Zustand der Einrichtung (11) bestimmt wird und ein erster und ein zweiter Betriebsparameter eines Antriebsstrangs (13) des Fahrzeugs abhängig von dem bestimmten Einrichtungszustand gesteuert wird, wobei der erste Betriebsparameter von Getriebeschaltpunkten gebildet wird,
**dadurch gekennzeichnet, dass**
der zweite Betriebsparameter von einem Einrücken einer Überbrückung in einem Drehmomentwandler (16) im Antriebsstrang (13) gebildet wird.

2. Verfahren nach Anspruch 1,
**dadurch gekennzeichnet, dass**
die Position der Einrichtung (11) bestimmt wird.

3. Verfahren nach Anspruch 2,
**dadurch gekennzeichnet, dass**
wenigstens zwei unterschiedliche Einrichtungspositionsbereiche vorherbestimmt werden, dass die Steuerung wenigstens eines Betriebsparameters für die vorherbestimmten Bereiche unterschiedlich ist und dass ein erster vorherbestimmter Einrichtungspositionsbereich gewählt wird, wenn die bestimmte Position innerhalb des vorherbestimmten Einrichtungspositionsbereichs liegt.

4. Verfahren nach Anspruch 2 oder 3,
**dadurch gekennzeichnet, dass**
die Position der Einrichtung (11) durch einen Hebewinkel und einen Kippwinkel eines Geräts (7) in der Einrichtung (11) bestimmt wird.

5. Verfahren nach Anspruch 3 und 4,
**dadurch gekennzeichnet, dass**
wenigstens zwei unterschiedliche Einrichtungspositionsbereiche jeweils für den Hebewinkel und den Kippwinkel des Geräts vorherbestimmt werden.

6. Verfahren nach Anspruch 5,
**dadurch gekennzeichnet, dass**
die Steuerung des Antriebsstrangbetriebsparameters sowohl für einen Gerätpositionsbereich für den Hebewinkel als auch für einen Gerätpositionsbereich für den Kippwinkel bestimmt wird.

7. Verfahren nach einem der vorhergehenden Ansprüche,
**dadurch gekennzeichnet, dass**
wenigstens zwei unterschiedliche Gangmodi vorherbestimmt werden, dass ein erster Gangmodus abhängig von dem bestimmten Einrichtungszustand gewählt wird, und dass der Antriebsstrangbetriebsparameter dem gewählten Gangmodus entsprechend gesteuert wird.

8. Verfahren nach einem der vorhergehenden Ansprüche,
**dadurch gekennzeichnet, dass**
wenigstens ein Betriebszustand des Fahrzeugs erfasst wird und der Betriebsparameter abhängig von dem erfassten Wert des Betriebszustands gesteuert wird.

9. Verfahren nach Anspruch 8,
**dadurch gekennzeichnet, dass**
der Betriebszustand Motordrehzahl und/oder Fahrzeuggeschwindigkeit umfasst.

10. Computerprogramm, das Codeeinrichtungen zur Durchführung aller Schritte nach einem der Ansprüche 1 bis 9 umfasst, wenn das Programm an einem Computer ausgeführt wird.

11. Computerprogrammerzeugnis mit Programmcodeeinrichtungen, die auf einem computerlesbaren Medium zur Durchführung des Verfahrens nach einem der Ansprüche 1 bis 9 gespeichert sind, wenn das Programmerzeugnis auf einem Computer ausgeführt wird.

12. Vorrichtung zur Bewegung eines Arbeitsfahrzeugs (1) mit einem Antriebsstrang (13) und einer Einrichtung (11) zur Handhabung von Objekten oder Material, wobei die Vorrichtung Mittel (27, 28) zur Erfassung eines Zustands der Einrichtung (11) und eine Steuereinheit (26, 29) zur Steuerung eines ersten und eines zweiten Betriebsparameters des Antriebsstrangs abhängig von dem bestimmten Einrichtungszustand umfasst, wobei der erste Betriebsparameter von Getriebeschaltpunkten gebildet wird,
**dadurch gekennzeichnet, dass**
der zweite Betriebsparameter von einem Einrücken einer Überbrückung in einem Drehmomentwandler (16) im Antriebsstrang (13)gebildet wird.

13. Vorrichtung nach Anspruch 12,
**dadurch gekennzeichnet, dass**
die Zustandsbestimmungsmittel (27, 28) zur Bestimmung einer Position der Einrichtung (11) konfiguriert sind.

14. Vorrichtung nach Anspruch 13,
**dadurch gekennzeichnet, dass**
in der Steuereinheit (26, 29) wenigstens zwei unterschiedliche vorherbestimmte Einrichtungspositionsbereiche gespeichert sind, dass die Steuerung des wenigstens eines Betriebsparameters für die vorherbestimmten Bereiche unterschiedlich ist und dass die Steuereinheit (26, 29) so konfiguriert ist, dass sie einen ersten vorherbestimmten Einrichtungspositionsbereich wählt, wenn die bestimmte Position innerhalb des vorherbestimmten Einrichtungspositionsbereichs liegt.

15. Vorrichtung nach Anspruch 13 oder 14,
wobei die Positionsbestimmungseinrichtung (27, 28) so konfiguriert ist, dass sie einen Hebewinkel und einen Kippwinkel eines Geräts (7) in der Einrichtung (11) bestimmt.

16. Vorrichtung nach Anspruch 14 und 15,
**dadurch gekennzeichnet, dass**
in der Steuereinheit (26, 29) wenigstens zwei unterschiedliche vorherbestimmte Einrichtungspositionsbereiche jeweils für den Hebewinkel und den Kippwinkel des Geräts gespeichert sind.

17. Vorrichtung nach Anspruch 16,
**dadurch gekennzeichnet, dass**
die Steuereinheit (26, 29) so konfiguriert ist, dass sie den Antriebsstrangbetriebsparameter auf der Basis sowohl eines Gerätpositionsbereichs für den Hebewinkel als auch eines Gerätpositionsbereichs für den Kippwinkel steuert.

18. Vorrichtung nach einem der Ansprüche 12-17,
**dadurch gekennzeichnet, dass**
wenigstens zwei unterschiedliche Gangmodi vorherbestimmt wird, dass ein erster Gangmodus abhängig von dem bestimmten Einrichtungszustand gewählt wird und dass der Antriebsstrangsbetriebsparameter dem gewählten Gangmodus entsprechend gesteuert wird.

19. Vorrichtung nach einem der Ansprüche 12-18,
**dadurch gekennzeichnet, dass**
die Vorrichtung Mittel (30, 32) zur Erfassung wenigstens eines Betriebszustands des Fahrzeugs umfasst und die Steuereinheit (26, 29) so konfiguriert ist, dass sie den Betriebsparameter abhängig von dem erfassten Wert des Betriebszustands steuert.

20. Vorrichtung nach Anspruch 19,
**dadurch gekennzeichnet, dass**
die Erfassungsmittel (30, 32) zur Erfassung von Motordrehzahl und/oder Fahrzeuggeschwindigkeit konfiguriert sind.

## Revendications

1. Procédé pour commander les mouvements d'un véhicule de travail (1) comprenant un équipement (11) de manipulation d'objets ou de matériau, dans lequel un état de l'équipement (11) est déterminé et un premier et un second paramètre de fonctionnement d'une ligne de transmission (13) du véhicule sont commandés en fonction de l'état d'équipement déterminé, le premier paramètre de fonctionnement étant formé par des points de changement de vitesse,
**caractérisé en ce que**
le second paramètre de fonctionnement est formé en mettant en prise un verrou dans un convertisseur de couple (16) de la ligne de transmission (13)

2. Procédé selon la revendication 1, **caractérisé en ce que** la position de l'équipement (11) est déterminée:

3. Procédé selon la revendication 2,
**caractérisé en ce que**
au moins deux zones de position d'équipement différentes sont prédéfinies, **en ce que** la commande du au moins un paramètre de fonctionnement est différente pour les zones prédéfinies, et **en ce qu'**une première zone de positionss d'équipement prédéfinie est sélectionnée lorsque la position déterminée est dans la zone de positionss d'équipement prédéfinie.

4. Procédé selon la revendication 2 ou 3,
**caractérisé en ce que**
la position de l'équipement (11) est déterminée par un angle de levage et un angle de basculement d'un accessoire (7) de l'équipement (11).

5. Procédé selon les revendications 3 et 4,
**caractérisé en ce que**
au moins deux zones de position d'équipement différentes sont prédéfinies pour chacun parmi l'angle de levage et l'angle de basculement de l'accessoire.

6. Procédé selon la revendication 5,
**caractérisé en ce que**
la commande du paramètre de fonctionnement de ligne de transmission est déterminée à la fois par une zone de positionss d'accessoire pour l'angle de levage et par une zone de positionss d'accessoire pour l'angle de basculement.

7. Procédé selon l'une quelconque des revendications précédentes,
**caractérisé en ce que** au moins deux modes de vitesses différents sont prédéfinis, **en ce qu'**un premier mode de vitesses est sélectionné en fonction de l'état d'équipement prédéterminé et **en ce que** le paramètre de fonctionnement de ligne de transmission est commandé conformément au mode de vitesses sélectionné.

8. Procédé selon l'une quelconque des revendications précédentes,
**caractérisé en ce que** :
au moins un état de fonctionnement du véhicule est détecté et le paramètre de fonctionnement est commandé en fonction de la valeur détectée de l'état de fonctionnement.

9. Procédé selon la revendication 8,
**caractérisé en ce que** l'état de fonctionnement comprend la vitesse moteur et/ou la vitesse du véhicule.

10. Programme d'ordinateur comprenant des moyens de codage pour effectuer toutes les étapes selon l'une quelconque des revendications 1 à 9 lorsque le programme est exécuté sur un ordinateur.

11. Produit de programme d'ordinateur comprenant des moyens de codage de programme mémorisés sur un support d'ordinateur pouvant être lu pour mettre en oeuvre le procédé selon l'une quelconque des revendications 1 à 9 lorsque le produit de programme est exécuté sur un ordinateur.

12. Dispositif pour déplacer un véhicule de travail (1) comprenant une ligne de transmission (13) et un équipement (11) destiné à manipuler des objets ou un matériau, dans lequel le dispositif comprend des moyens (27, 28) pour déterminer un état de l'équipement (11) et une unité de commande (26, 29) pour commander un premier et un second paramètres de fonctionnement de la ligne de transmission en fonction de l'état d'équipement déterminée, le premier paramètre de fonctionnement étant formé par des points de changement de transmission,
**caractérisé en ce que**
le second paramètre de fonctionnement est formé en mettant en prise un verrouillage dans un convertisseur de couple (16) de la ligne de transmission (13).

13. Dispositif selon la revendication 12,
**caractérisé en ce que** les moyens de détermination d'état (27, 28) sont agencés pour déterminer une position de l'équipement (11).

14. Dispositif selon la revendication 13,
**caractérisé en ce que**
l'unité de commande (26, 29) mémorise au moins deux zones de position d'équipement prédéfinies différentes, **en ce que** la commande du au moins un paramètre de fonctionnement est différente pour les zones prédéfinies, et **en ce que** l'unité de commande (26, 29) est agencée pour sélectionner une première zone de positions d'équipement prédéfinie lorsque que la position déterminée est dans la zone de positions d'équipement prédéfinie.

15. Dispositif selon la revendication 13 ou 14,
**caractérisé en ce que**
les moyens de détermination de position (27, )28 sont agencés pour déterminer un angle de levage et un angle de basculement d'un accessoire (7) de l'équipement (11).

16. Dispositif selon la revendication les revendications 14 et 15,
**caractérisé en ce que**
l'unité de commande (26, 29) mémorise au moins deux zones de position d'équipement prédéfinies différentes pour chacun parmi l'angle de levage et l'angle de basculement de l'accessoire.

17. Dispositif selon la revendication 16,
**caractérisé en ce que**
l'unité de commande (26, 29) est agencée pour commander le paramètre de fonctionnement de ligne de transmission sur la base à la fois d'une zone de positions d'accessoire pour l'angle de levage et une zone de positions d'accessoire pour l'angle de basculement.

18. Dispositif selon l'une quelconque des revendications 12 à 17,
**caractérisé en ce qu'**au moins deux modes de vitesses différents sont prédéfinis, **en ce qu'**un premier mode de vitesses est sélectionné en fonction de l'état d'équipement prédéterminé et **en ce que** le paramètre de fonctionnement de ligne de transmission est commandé conformément au mode de vitesses sélectionné.

19. Dispositif selon l'une quelconque des revendications 12 à 18,
**caractérisé en ce que**
le dispositif comprend des moyens (30, 32) pour détecter au moins un état de fonctionnement du véhicule et l'unité de commande (26, 29) est agencée pour commander le paramètre de fonctionnement en fonction de la valeur détectée de l'état de fonctionnement.

20. Dispositif selon la revendication 19,
**caractérisé en ce que** les moyens de détection (30, 32) sont agencés pour détecter la vitesse moteur et/ou la vitesse du véhicule
